# EUROPEAN PATENT APPLICATION

(11) **EP 4 297 219 A1**
(43) Date of publication of application: **27.12.2023**
(21) Application number: 23178253.3
(22) Date of filing: 08.06.2023
(51) Int. Cl.: H02J 1/06, H02J 7/00

(54) **ADAPTER APPARATUS, BATTERY APPARATUS AND ELECTRONIC DEVICE SYSTEM**

(30) Priority: 21.06.2022 CN 202210708532
(71) Applicant: Techtronic Cordless GP, Anderson, SC 29621 (US)
(72) Inventor: WANG, Ren Jie, Dongguan City (CN); WEN, Chao, Dongguan City (CN); WANG, Liang He, Dongguan City (CN); MA, Hai Bo, Kwai Chung (HK)
(74) Representative: Meissner Bolte Partnerschaft mbB

(57) **Abstract**

The present disclosure relates to an adapter apparatus, a battery apparatus and an electronic device system. The adapter apparatus comprises: a power transmission line, configured to be coupled between a DC power source and load equipment; and a control circuit apparatus, configured to communicate with the DC power source via a first group of communication ports according to a first communication protocol, and to communicate with the load equipment via a second group of communication ports according to a second communication protocol, the first communication protocol being different from the second communication protocol. The transmitted data is used to regulate the power supply, which allows a DC power source such as a battery to power the load equipment at a desired power level. In addition, when the control circuit has multiple communication protocols to choose from, the adapter apparatus can adapt multiple types of DC power supplies with different communication protocols to the load equipment, and can also adapt multiple types of load equipment with different communication protocols to the DC power source.

## Description

### Technical Field

The present disclosure relates to an adapter apparatus, a battery apparatus and an electronic device system for power transmission and communication between a DC power source and load equipment using different communication protocols.

### Background Art

Load equipment is usually powered by a DC power source for it to operate. At present, there is a technological trend that different types of load equipment are equipped with standard interfaces that can be used for power transmission and data communication. Providers of load equipment, for example, vacuum cleaners, robot vacuums, dishwashers, microwave ovens, and power tools, usually only design the load equipment but do not provide the DC power source. The DC power source (for example, a battery pack) required for the load equipment may be provided by a DC power source manufacturer. In this way, load equipment providers can focus on designing and manufacturing different types of load equipment according to specific application needs.

In some cases, because the DC power source and the load equipment use different communication protocols, the DC power source sometimes cannot be directly connected to different types of load equipment with standard interfaces, and therefore power transmission and data communication cannot be directly performed.

### SUMMARY OF THE INVENTION

In view of the above, the present disclosure proposes an adapter apparatus, a battery apparatus and an electronic device system.

According to a first aspect of the present disclosure, an adapter apparatus is provided. The adapter apparatus comprises a power transmission line and a control circuit apparatus. The power transmission line is configured to be coupled between a DC power source and load equipment. The control circuit apparatus is configured to communicate with the DC power source via a first group of communication ports according to a first communication protocol, and to communicate with the load equipment via a second group of communication ports according to a second communication protocol, the first communication protocol being different from the second communication protocol.

In some embodiments of the present disclosure, an adapter apparatus compatible with a plurality of communication protocols is used to couple a DC power source, such as a battery, to the load equipment. The adapter apparatus has a control circuit apparatus for switching between different communication protocols. In the case that the DC power source and the load equipment coupled to the adapter apparatus have different communication protocols, the control circuit apparatus can convert the data of different communication protocols, so that the DC power source and the load equipment can have good data transmission between them. The transmitted data is used to regulate the power supply, which allows a DC power source such as a battery to power the load equipment at the desired power level. In addition, when the control circuit apparatus has a plurality of communication protocols to choose from, the adapter apparatus can adapt multiple types of DC power supplies with different communication protocols to the load equipment, and can also adapt multiple types of load equipment with different communication protocols to the DC power source.

In some embodiments, the control circuit apparatus comprises an enable terminal, and the enable terminal is capable of outputting an enable signal to the load equipment to allow the load equipment to work normally. In some embodiments, the control circuit apparatus is configured not to output the enable signal when communication between the adapter apparatus and the load equipment is abnormal or when the load equipment does not execute an instruction of the adapter apparatus.

By using an enable terminal, it is advantageous to use the enable signal to actively control whether the load equipment is allowed to work according to the communication between the adapter apparatus and the load equipment.

In some embodiments, the control circuit is configured to convert data coming from the DC power source according to the first communication protocol into data according to the second communication protocol; and to convert data coming from the load equipment according to the second communication protocol into data according to the first communication protocol.

In some embodiments, the adapter apparatus further comprises a first voltage converter. The first voltage converter is configured to convert a first voltage on a power line in the power transmission line into a second voltage, and to provide the second voltage to the control circuit apparatus.

In some embodiments, the adapter apparatus further comprises a switching apparatus. The switching apparatus is configured to selectively disconnect power transmission on the power transmission line.

In some embodiments, the adapter apparatus further comprises a measuring apparatus. The measuring apparatus is used to measure a temperature, a passing current and/or a voltage of the adapter apparatus.

In some embodiments, the adapter apparatus further comprises a protection apparatus. The protection apparatus is used to cut off the power transmission line in case of over-temperature, overcurrent or overvoltage.

In some embodiments, the adapter apparatus further comprises a level shifter. The level shifter is connected to a communication port of the load equipment, to electrically isolate the second group of communication ports from the communication port of the load equipment.

In some embodiments, the level shifter comprises a first level shifting portion and a second level shifting portion. A ground level of the first level shifting portion is electrically coupled to the ground level of the control circuit apparatus, the second level shifting portion is isolated from the first level shifting portion, a ground level of the second level shifting portion is electrically coupled to a ground level of a controller of the load equipment, and the second level shifting portion is further configured to perform data transmission with the first level shifting portion.

According to a second aspect of the present disclosure, a battery apparatus is provided. The battery apparatus comprises a DC power source and an adapter apparatus. The adapter apparatus is an adapter apparatus according to the embodiments described above. The battery apparatus thus has the features and advantages of the adapter apparatus according to the embodiments described above.

According to a third aspect of the present disclosure, an electronic device system is provided. The electronic device system comprises load equipment, a plurality of battery apparatuses and a level shifter. The plurality of battery apparatuses comprise first battery apparatuses and second battery apparatuses. The first battery apparatuses are formed as a negative output terminal, and the second battery apparatuses are formed as a positive output terminal. The level shifter is positioned between a second group of communication ports of the second battery apparatuses and a communication port of the load equipment, to electrically isolate the second group of communication ports of the second battery apparatuses from the communication port of the load equipment. Both the first and the second battery apparatuses are battery apparatuses according to the embodiments described above. The electronic device system thus has the features and advantages of the battery apparatus according to the embodiments described above.

The electronic device system according to the present disclosure makes it possible to use a plurality of battery apparatuses connected in series to power the same load equipment in an advantageous manner. By connecting a plurality of battery apparatuses in series with each other, the total voltage and the efficiency of the system are improved, and the energy consumption of the system is reduced. This is especially suitable for load equipment requiring high voltage.

In some embodiments, the level shifter comprises a first level shifting portion and a second level shifting portion. A ground level of the first level shifting portion is electrically coupled to a ground level of a control circuit apparatus of the second battery apparatus. The second level shifting portion is electrically isolated from the first level shifting portion. A ground level of the second level shifting portion is electrically coupled to a ground level of a controller of the load equipment, and the second level shifting portion is further configured to perform data transmission with the first level shifting portion.

In some embodiments, a second group of communications ports of the first battery apparatuses are in communication connection with the communication port of the load equipment. In some embodiments, the level shifter being a photocoupler isolator, a capacitive isolator or a transformer isolator. In some embodiments, the level shifter comprises a third voltage converter used for supplying power.

### BRIEF DESCRIPTION OF THE DRAWINGS

Further details and advantages of the present disclosure are described in detail below by means of examples with reference to the drawings.
Figure 1 shows the electronic device according to some examples of the present disclosure;
Figure 2 is a circuit diagram of the adapter apparatus according to some examples of the present disclosure;
Figure 3 is a circuit diagram of the battery apparatus according to some examples of the present disclosure; and
Figure 4 is a circuit diagram of the electronic device according to some other examples of the present disclosure.

In the drawings, the same or corresponding reference numerals represent the same or corresponding parts.

### SPECIFIC EMBODIMENTS

Embodiments of the present disclosure will be described in more detail below with reference to the drawings. Although certain examples of the present disclosure are shown in the drawings, it should be understood that the present disclosure may be embodied in various forms and should not be construed as limited to the examples described herein; on the contrary, these examples are provided for a more thorough and complete understanding of the present disclosure. It should be understood that the drawings and examples of the present disclosure are for exemplary purposes only, and are not intended to limit the scope of protection of the present disclosure.

In the description of the examples of the present disclosure, the term "comprising" and similar expressions should be interpreted as an open inclusion, i.e., "including but not limited to". The term "based on" should be understood as "based at least in part on". The term "one example" or "the example" should be understood as "at least one example". The terms "first", "second", etc., may refer to different objects or the same object. Other definitions, both explicit and implied, may also be included below.

As mentioned previously, the power source sometimes cannot be directly connected to different types of load equipment with different interfaces (including standard interfaces), and therefore power transmission and data communication cannot be directly performed.

In the present disclosure, an adapter apparatus compatible with a plurality of communication protocols may be used to couple a DC power source, such as a battery, to the load equipment. The adapter apparatus has a control circuit apparatus for switching between different communication protocols. In the case that the DC power source and the load equipment coupled to the adapter apparatus have different communication protocols, the control circuit apparatus can convert the data of different communication protocols, so that the DC power source and the load equipment can have good data transmission between them. The transmitted data is used to regulate the power supply, which allows a DC power source such as a battery to power the load equipment at the desired power level. In addition, when the control circuit apparatus has a plurality of communication protocols to choose from, the adapter apparatus can adapt multiple types of DC power supplies with different communication protocols to the load equipment, and can also adapt multiple types of load equipment with different communication protocols to the DC power source.

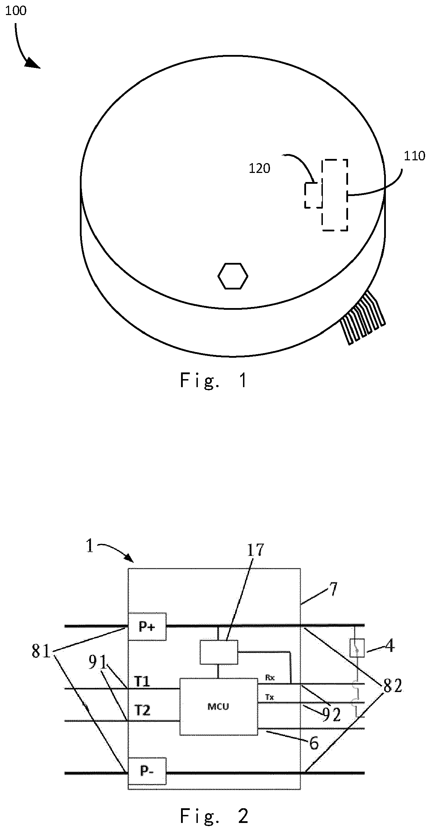

Figure 1 shows the electronic device 100 according to some examples of the present disclosure. In some examples, the electronic device 100 may be a robot vacuum. The electronic device 100 comprises load equipment, a DC power source 110 and an adapter 120. In some examples, other components of the electronic device 100 except the DC power source 110 and the adapter 120 are considered as load equipment. Although the electronic device 100 is shown here as a robot vacuum as an example, it can be understood that the present disclosure is not limited thereto. The electronic device 100 may be other devices with load equipment, a DC power source and an adapter, for example, a vacuum cleaner, a robot vacuum, a dishwasher, a microwave oven, a power tool, etc.

The adapter 120 may be coupled between the load equipment and the DC power source 110, and supplies power from the DC power source to the load equipment. Further, the adapter 120 also bidirectionally transmits data between the load equipment and the DC power source 110.

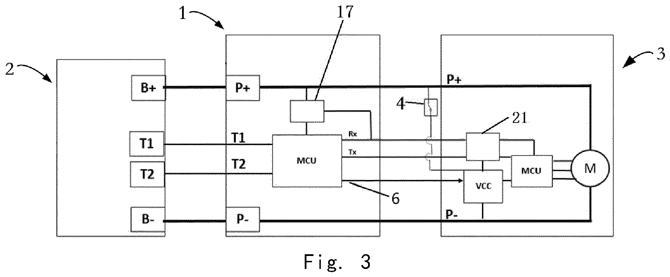

Figure 2 is a circuit diagram of the adapter apparatus 1 according to some examples of the present disclosure, and Figure 3 is a circuit diagram of the battery apparatus according to some examples of the present disclosure. Referring to Figure 2 and Figure 3, the adapter apparatus 1 may be, for example, an embodiment of the adapter 120 in Figure 1, the DC power source 2 may be an embodiment of the DC power source 110 in Figure 1, and the load equipment 3 may be an embodiment of the load equipment of the electronic device 100 in Figure 1.

In one example, the adapter apparatus 1 is configured for power transmission between the DC power source 2 and the load equipment 3. The DC power source 2 is, for example, a battery. The adapter apparatus 1 comprises a housing 7, power interfaces and communication interfaces. The power interfaces include a first pair of power interfaces 81 and a second pair of power interfaces 82. The power transmission line is coupled between the DC power source 2 and the load equipment 3, and is coupled to the DC power source 2 and the load equipment 3 respectively via the first pair of power interfaces 81 and the second pair of power interfaces 82. The first pair of power interfaces 81 are suitable for being connected with the positive and negative poles of the DC power source 2 so as to draw power. The second pair of power interfaces 82 are suitable for outputting the power drawn to the load equipment 3.

The communication interfaces include a first group of communication interfaces 91 and a second group of communication interfaces 92. The first group of communication interfaces 91 are suitable for communicating with the DC power source 2, for example, communicating with a control circuit apparatus in the DC power source 2. The second group of communication interfaces 92 are suitable for communicating with the load equipment 3, for example, communicating with a control circuit apparatus in the load equipment 3 via a communication circuit 21, for example, a universal asynchronous receiver/transmitter (UART). The control circuit apparatus in the load equipment 3 comprises, for example, a microprogrammed control unit (MCU). The communication circuit 21 will be described later.

The control circuit apparatus of the adapter apparatus 1 is connected to the first group of communication interfaces 91 and the second group of communication interfaces 92. In one example, the control circuit apparatus of the adapter apparatus 1 comprises, for example, an MCU. It can be understood that other devices with control functions may also be used, for example, processors or single-chip microcomputers, etc. Therefore, the control circuit apparatus of the adapter apparatus 1 can communicate with the DC power source 2 and also with the load equipment 3.

The communication protocol between the control circuit apparatus of the adapter apparatus 1 and the DC power source 2 may be different from the communication protocol between the control circuit apparatus of the adapter apparatus 1 and the load equipment 3. In other words, the control circuit apparatus can communicate with the DC power source 2 via the first group of communication ports 91 according to a first communication protocol, and communicate with the load equipment 3 via the second group of communication ports 92 according to a second communication protocol. In one example, the first communication protocol is different from the second communication protocol. In another example, the first communication protocol is the same as the second communication protocol. It can be understood that the control circuit apparatus may have a plurality of communication protocol switching mechanisms therein to convert the data of different communication protocols between each other.

In this way, the control circuit apparatus of the adapter apparatus 1 can realise interaction between with the DC power source 2 and the load equipment 3. The DC power source 2 can obtain a plurality of parameters of the load equipment 3, for example, the rotation speed, the torque, the temperature, etc., through the adapter apparatus 1. Similarly, the load equipment 3 can obtain a plurality of parameters of the DC power source 2, for example, the power, the temperature, the discharge current, etc., through the adapter apparatus 1. Thus, the DC power source 2 and the load equipment 3 can work together to realise the optimal operation control. For example, when the temperature of the DC power source 2 or the load equipment 3 is too high, the DC power source 2 may stop discharging, or when the temperature is close to the threshold, the DC power source 2 may reduce the discharge current accordingly and resume normal discharging when the temperature drops to an appropriate temperature. The above threshold and appropriate temperature may be set for different batteries and equipment.

Through the adapter apparatus 1 according to the present disclosure, power transmission between different types of load equipment and DC power sources can be effectively realised, thereby eliminating the problem of failure in power transmission due to incompatibility between different types of load equipment and the DC power source. Here, the adapter apparatus 1 may be connected to one DC power source and one piece of load equipment. In some examples, the adapter apparatus 1 may be provided on the DC power source. In some other examples, the adapter apparatus 1 may be provided as an independent component, and thus is detachably installed on the DC power source or power consuming equipment.

Further, in some examples, the adapter apparatus 1 comprises a switch 4. The adapter apparatus 1 turns on the power connection to the load equipment 3 when the switch 4 is turned on, and cuts off the power connection to the load equipment 3 when the switch 4 is turned off. In this way, whether to supply power to the load equipment 3 can be controlled through the switch 4. Especially in the event of an emergency, the switch 4 can be manually turned off directly, thereby avoiding further losses or an accident. In other examples, the switch 4 may also be provided on the load equipment 3.

In some examples, the adapter apparatus 1 further comprises a first voltage converter 17 for supplying power to the control circuit apparatus. The first voltage converter 17 is configured to convert a first level coming from the first pair of power interfaces 91 into a second level. The control circuit apparatus is configured to receive a first communication signal from the DC power source 2 and a second communication signal from the load equipment 3, and to control whether to supply power to the load equipment 3 based on the first communication signal and the second communication signal. It should be noted that, in some examples, the level required for the control circuit apparatus of the adapter apparatus 1 is much lower than the level provided by the DC power source 2, and therefore the first voltage converter 17 may be used to convert or reduce the high level provided by the DC power source 2 (i.e., the first level from the first pair of power interfaces) to a low level (i.e., the second level) suitable for the operation of the control circuit apparatus. In some other examples, the level of the control circuit apparatus of the adapter apparatus 1 is equivalent to the level provided by the DC power source 2, and in this case, the adapter apparatus 1 may not have the first voltage converter 17. In some examples, the first voltage converter 17 comprises a linear voltage regulator.

In some examples, the control circuit apparatus of the adapter apparatus 1 comprises an enable terminal 6. The load equipment 3 also comprises a control circuit apparatus such as an MCU and a load-side voltage converter for powering the control circuit. The control circuit apparatus of the adapter apparatus 1 outputs an enable signal to the load equipment 3 through the enable terminal 6, so that the load-side voltage converter of the load equipment 3 can supply power to the control circuit apparatus of the load equipment 3 according to the enable signal.

When the communication between the adapter apparatus 1 and the load equipment 3 is normal or when the load equipment 3 has executed the instruction of the adapter apparatus 1, the control circuit apparatus of the adapter apparatus 1 outputs an enable signal to the load equipment 3 through the enable terminal 6, thereby allowing power supply to the load equipment 3, or when the communication between the adapter apparatus 1 and the load equipment 3 is abnormal or the load equipment 3 does not execute the instruction of the adapter apparatus 1, the enable signal is not output, thereby prohibiting power supply to the load equipment 3. It can be understood that the enable terminal 6 may be implemented in various feasible ways, which will not be detailed in the present disclosure, as long as the enabling function can be realised.

In some examples, the adapter apparatus 1 may further comprise a measuring apparatus, used to measure the temperature, the passing current, the voltage, etc. The adapter apparatus 1 may further comprise a protection apparatus, used to cut off the power supply circuit in case of over-temperature, overcurrent or overvoltage.

In some examples, the first group of communication interfaces and the second group of communication interfaces are serial communication interfaces. In some other examples, the first group of communication interfaces and the second group of communication interfaces may also be parallel communication interfaces. Here, which communication method is used depends on the specific application, and is not limited to the above in the present disclosure.

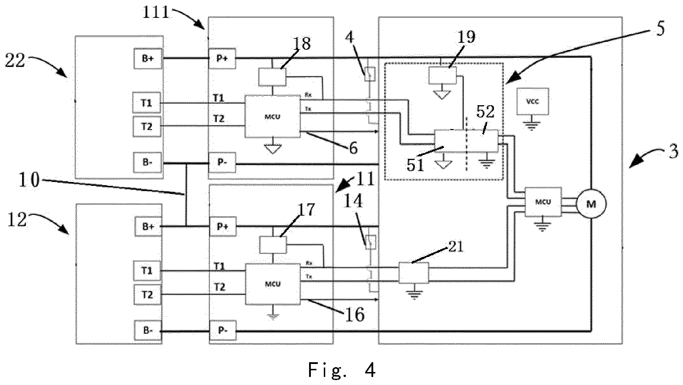

Figure 4 is a circuit diagram of the electronic device according to some other examples of the present disclosure. The electronic device system in Figure 4 comprises a first adapter apparatus 11 and a second adapter apparatus 111. The configuration and operation of the first adapter apparatus 11 and the second adapter apparatus 111 are the same as or similar to the adapter apparatus 1 described above for Figure 2 and Figure 3. For example, the first adapter apparatus 11 comprises a first enable terminal 16 and a first switch 14, etc., which will not be detailed here. It can be understood that all aspects of the adapter apparatus 1 described above with respect to Figure 2 and Figure 3 can be applied to the first adapter apparatus 11 and the second adapter apparatus 111 shown in Figure 4. In one example, the first adapter apparatus 11 and the second adapter apparatus 111 may be provided separately, and may be independent of the battery apparatus and the load equipment 3. In another example, the first adapter apparatus 11 and the second adapter apparatus 111 may be integrated in a single adapter apparatus assembly, and may be independent of the battery apparatus and the load equipment 3. In yet another example, the first adapter apparatus 11 and the second adapter apparatus 111 may be integrated in a battery apparatus. The battery apparatus comprises a first DC power source 12 and a second DC power source 22. The present disclosure is not limited thereto.

In one example, the battery apparatus comprises a first DC power source 12 and a second DC power source 22, and these DC power sources 12 and 22 are the same in number as the adapter apparatuses and correspond to them one by one. Although the two DC power sources and the two adapter apparatuses are shown here, it can be understood that this is only exemplary and does not limit the scope of the present disclosure. In some examples, the battery apparatus may comprise more DC power sources connected in series. Accordingly, more corresponding adapter apparatuses may be provided. In some other examples, a plurality of DC power sources may be connected in parallel and controlled by the corresponding adapter apparatuses. In Figure 4, the first DC power source 12 and the second DC power source 22 are connected in series with each other via the connection line 10, so that the load equipment 3 is powered by at least the two DC power sources 12 and 22 connected in series.

Advantageously, the battery apparatus according to the present disclosure makes it possible to use a plurality of DC power sources connected in series to power the same load equipment. By connecting a plurality of DC power sources in series with each other, the total voltage is increased. This is especially suitable for load equipment requiring high voltage. The number of DC power sources connected in series depends on the voltage requirement of the load equipment.

Further, in some examples, the first adapter apparatus 11 and the second adapter apparatus 111 each comprises a corresponding control circuit apparatus and a first voltage converter 17 and a second voltage converter 18 for supplying power to the corresponding control circuit apparatus 18, wherein the first voltage converter 17 and the second voltage converter 18 are configured to convert a first level coming from the first pair of power interfaces into a second level. The load equipment also comprises a control circuit apparatus and a load-side voltage converter (not shown) for powering the control circuit apparatus, wherein the load-side voltage converter is configured to convert the output level coming from the second pair of power interfaces into a third level. The third level may be the same as or different from the second level, which is not limited in the present disclosure.

As shown in Figure 4, each of the DC power sources 12 and 22 is connected to the MCU of the load equipment 3. Even in the case where the communication protocols of the DC power sources 12 and 22 and the load equipment 3 are different, it is possible to switch the protocol via the adapter apparatus. In this way, the load equipment can communicate with each of the DC power sources 12 and 22, so that interactions between the DC power sources 12 and 22 and the load equipment 3 can be realised. It can be understood that each of the DC power sources 12 and 22 can obtain the information of the load equipment 3, and vice versa.

In some examples, the electronic device system further comprises a level shifter 5. The level shifter 5 comprises a first level shifting portion 51 and a second level shifting portion 52. The ground level of the first level shifting portion 51 is electrically coupled to the ground level of a control circuit apparatus of the second DC power source 22. The second level shifting portion 52 is electrically isolated from the first level shifting portion 51, and the ground level of the second level shifting portion 52 is electrically coupled to the ground level of a controller of the load equipment. The second level shifting portion 52 is further configured to perform data transmission with the first level shifting portion 51.

As shown in Figure 4, the first DC power source 12 and a second DC power source 22 are connected in series. The level shifter 5 is connected to the second DC power source 22. In one example, the level shifter 5 comprises a third voltage converter 19, for example, a low dropout linear voltage regulator, used for supplying power. The first level shifting portion 51 of the level shifter 5 is located on the same side as the second DC power source 22, and the ground potential of the first level shifting portion 51 of the level shifter 5 is the same as the ground potential of the second DC power source 22 (referred to as the first ground potential). The second level shifting portion 52 of the level shifter 5 is located on the same side as the load equipment 3, and the ground potential of the second level shifting portion 52 of the level shifter 5 is the same as the ground potential of the load equipment 3 (referred to as the second ground potential). The level shifter 5 thus operates as a potential isolator, so that the first ground potential is isolated from the second ground potential. However, the level shifter 5 does not affect the communication between the DC power source and the load equipment. In fact, the level shifter 5 converts the control signal shown in the left part of Figure 4 into the control signal shown in the right part of the figure that is suitable for the control circuit apparatus of the load equipment 3. As a result, damage to the control circuit apparatus of the load equipment 3 is prevented. In one example, the level shifter may be a photocoupler isolator, a capacitive isolator, a transformer isolator, etc.

Since the potential isolator is provided between the load equipment 3 and the second DC power source 22, the communication interfaces of the adapter apparatus can be electrically isolated from the corresponding communication interface of the load equipment 3, thereby preventing damage to the control circuit apparatus, for example an MCU, etc., of the load equipment 3. Although it is shown here that the level shifter 5 is located within the load equipment 3, this is only exemplary and does not limit the scope of the present disclosure. In some examples, the level shifter 5 may be located in the second adapter apparatus 111, and may be part of the second adapter apparatus 111.

The first DC power source 12 communicates with the load equipment 3 via the first adapter apparatus 11. The load equipment 3 accordingly communicates with the first DC power source 12 via a communication circuit 21, for example, a universal asynchronous receiver/transmitter (UART). It can be understood that, in some examples, the level shifter 5 can be used to replace the communication circuit 21, which is not limited in the present disclosure. Similarly, the level shifter in this case may be located in the load equipment 3 or in the second adapter apparatus 111.

Through the adapter apparatus, the battery apparatus having the adapter apparatus and the electronic device system having the battery apparatus according to the present disclosure, power transmission and communication between different types of load equipment and DC power sources can be effectively realised, thereby eliminating the problem of failure in power transmission or communication due to incompatibility between different types of load equipment and the DC power source.

Although the subject matter has been described in language specific to structural features, it should be understood that the subject matter defined in the appended claims is not necessarily limited to the specific features described above. Rather, the specific features described above are merely exemplary forms of implementing the claims.

## Claims

1. Adapter apparatus, comprising:
a power transmission line, configured to be coupled between a DC power source and load equipment; and
a control circuit apparatus, configured to communicate with the DC power source via a first group of communication ports according to a first communication protocol, and to communicate with the load equipment via a second group of communication ports according to a second communication protocol, the first communication protocol being different from the second communication protocol.

2. Adapter apparatus according to Claim 1, wherein the control circuit apparatus comprises an enable terminal, and the enable terminal is capable of outputting an enable signal to the load equipment to allow the load equipment to work normally.

3. Adapter apparatus according to Claim 2, wherein the control circuit apparatus is configured not to output the enable signal when communication between the adapter apparatus and the load equipment is abnormal or when the load equipment does not execute an instruction of the adapter apparatus.

4. Adapter apparatus according to any one of Claims 1 to 3, wherein the control circuit apparatus is configured to:
convert data coming from the DC power source according to the first communication protocol into data according to the second communication protocol; and
convert data coming from the load equipment according to the second communication protocol into data according to the first communication protocol.

5. Adapter apparatus according to any one of Claims 1 to 3, further comprising:
a first voltage converter, configured to convert a first voltage on a power line in the power transmission line into a second voltage, and to provide the second voltage to the control circuit apparatus.

6. Adapter apparatus according to any one of Claims 1 to 3, further comprising:
a switching apparatus, configured to selectively disconnect power transmission on the power transmission line.

7. Adapter apparatus according to any one of Claims 1 to 3, further comprising a measuring apparatus, used to measure a temperature, a passing current and/or a voltage of the adapter apparatus.

8. Adapter apparatus according to any one of Claims 1 to 3, further comprising a protection apparatus, used to cut off the power transmission line in case of over-temperature, overcurrent or overvoltage.

9. Adapter apparatus according to any one of Claims 1 to 3, wherein same further comprises a level shifter, which is connected to a communication port of the load equipment, to electrically isolate the second group of communication ports from the communication port of the load equipment.

10. Adapter apparatus according to Claim 9, wherein the level shifter comprises:
a first level shifting portion, a ground level of the first level shifting portion being electrically coupled to a ground level of the control circuit apparatus; and
a second level shifting portion, which is electrically isolated from the first level shifting portion, a ground level of the second level shifting portion being electrically coupled to a ground level of a controller of the load equipment, and the second level shifting portion being further configured to perform data transmission with the first level shifting portion.

11. Battery apparatus, comprising:
a DC power source; and
the adapter apparatus according to any one of Claims 1 to 8.

12. Electronic device system, comprising:
load equipment;
a plurality of the battery apparatuses according to Claim 11 connected in series and supplying power to the load equipment, the plurality of battery apparatuses comprising first battery apparatuses and second battery apparatuses, the first battery apparatuses being formed as a negative output terminal, and the second battery apparatuses being formed as a positive output terminal; and
a level shifter, positioned between a second group of communication ports of the second battery apparatuses and a communication port of the load equipment, to electrically isolate the second group of communication ports of the second battery apparatuses from the communication port of the load equipment.

13. Electronic device system according to Claim 12, wherein the level shifter comprises:
a first level shifting portion, a ground level of the first level shifting portion being electrically coupled to a ground level of a control circuit apparatus of the second battery apparatus; and
a second level shifting portion, which is electrically isolated from the first level shifting portion, a ground level of the second level shifting portion being electrically coupled to a ground level of a controller of the load equipment, and the second level shifting portion being further configured to perform data transmission with the first level shifting portion.

14. Electronic device system according to Claim 12 or 13, wherein a second group of communications ports of the first battery apparatuses are in communication connection with the communication port of the load equipment.

15. Electronic device system according to Claim 12 or 13, the level shifter being a photocoupler isolator, a capacitive isolator or a transformer isolator.

16. Electronic device system according to Claim 12 or 13, the level shifter comprising a third voltage converter used for supplying power.
